# EUROPEAN PATENT SPECIFICATION

(11) **EP 4 112 499 B1**
(45) Date of publication and mention of the grant of the patent: **30.04.2025**
(21) Application number: 21759990.1
(22) Date of filing: 24.02.2021
(51) Int. Cl.: G05D 1/698, B65G 1/10, B65G 1/137, G05D 1/246, G05D 1/249, G05B 19/418, G06Q 10/087, G05D 105/28, G05D 107/70, G05D 109/10

(54) **TRANSPORT CONTROL DEVICE, TRANSPORT CONTROL METHOD, AND PROGRAM**
TRANSPORTSTEUERVORRICHTUNG, TRANSPORTSTEUERVERFAHREN UND PROGRAMM
DISPOSITIF DE COMMANDE DE TRANSPORT, PROCÉDÉ DE COMMANDE DE TRANSPORT ET PROGRAMME

(30) Priority: 28.02.2020 JP 2020034082
(43) Date of publication of application: 04.01.2023
(73) Proprietor: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: YOKOYAMA, Kenichi, Kawasaki-shi, Kanagawa 212-0013 (JP); SAIMEI, Kazuya, Kawasaki-shi, Kanagawa 212-0013 (JP)
(74) Representative: Horn Kleimann Waitzhofer Schmid-Dreyer Patent- und Rechtsanwälte PartG mbB
(86) International application number: PCT/JP2021/006799
(87) International publication number: WO 2021/172335

(56) References cited:
- JP-A- 2015 096 993
- JP-A- 2016 037 377
- JP-A- 2019 077 549
- US-A1- 2016 246 301
- US-A1- 2018 364 719
- US-A1- 2019 127 146
- US-B1- 8 965 562
- US-B1- 9 067 317

## Description

### FIELD

Embodiments described herein relate generally to a transport control device, a transport control method, and a program.

### BACKGROUND

Recently, as the volume of objects such as cargo handled at distribution centers increases in the field of logistics, diligence is being made for greater efficiency in various approaches in relation to sorting and transporting of objects. As one approach, automated guided vehicles have been introduced to transport objects without requiring manpower. For instance, an automated guided vehicle ducks under a rack in which objects are contained, lifts the rack, and transports the rack to a targeted location.

### CITATION LIST

JP 2012 - 197 184 discloses a method for transporting inventory items includes moving a mobile drive unit to a first point within a workspace. The first point is a location of an inventory holder. The method further includes docking the mobile drive unit with the inventory holder and moving the mobile drive unit and the inventory holder to a second point within the workspace. The second point is associated with conveyance equipment. The method further includes moving the inventory holder to a third point within the workspace using the conveyance equipment.

US 2016 / 0 246 301 A1 discloses a transport vehicle control device including: a storage portion that stores map information in which a state of a cell where a rack is arranged is saved for each cell; a data transceiver that receives the latest state of a cell from a transport vehicle which transports the rack; a map manager that updates the map information, each time the data transceiver receives the latest state of the cell, using the latest state of the cell received; and a route searcher that searches for a route for the transport vehicle transporting the rack based on the map information updated. The transport vehicle control device of the disclosure further includes a cell-for-rearranged-rack determiner that determines a cell into which the rack is rearranged on the basis of a usage frequency of articles to be stored on the rack.

US 2019 / 0 127 146 A1 discloses a rack management system, including a processor and a storage unit. The storage unit stores information indicating positions of sections included in an area in which storage racks that store articles can be arranged. One of the storage racks can be arranged in each of the sections. At least one of the sections is surrounded by other adjacent sections without an aisle to convey the storage racks therebetween. The processor classifies the sections into sections assigned ranks indicating a degree of efficiency of an operation to convey the storage racks placed therein to a predetermined working area, and one or more empty sections into which, if there is a need to move one or more other storage racks in order to convey a storage rack placed in a given section, the other storage racks that were moved are placed, and outputs results of the classification.

US 8 965 562 B1 discloses an inventory system that has mobile drive units that freely and independently move about a facility to transport inventory holders. The mobile drive units may operate through communications with other drive units, or under a more centralized control of a management module. For various operating scenarios, the mobile drive units are directed to shuffle the inventory holders in a manner that minimizes travel of the mobile drive units, thereby improving overall system efficiency. One or more single mobile drive units may be used to transport inventory holders to and from a region, and to sequentially reposition or slide each of the inventory holders within the region according to a priority ordering.

### SUMMARY

### TECHNICAL PROBLEM

As a volume of objects to be handled increases, the storage space for racks that store objects needs to be expanded, which increases costs. Aligning the racks at high density may be one solution; however, if the racks are simply placed with no space in-between, there may be a difficulty in retrieving a rack from the back or middle of the aligned rack group. Moreover, once the rack is retrieved, it may also become difficult to return it to the place. There is a demand from business operators for increasing the efficiency of storing, retrieving, and replacing objects.

The purpose of the embodiments is to offer a transport control device, a transport control method and program for improving efficiency in storing, retrieving and replacing objects.

### SOLUTION TO PROBLEM

An information processing apparatus according to an embodiment includes the features of claim 1.

### BRIEF DESCRIPTION OF THE DRAWINGS

FIG. 1 is a diagram for schematically showing an exemplary configuration of a transport control system according to an embodiment.
FIG. 2 is a diagram for showing an example of an AGV and a rack transported by the AGV in the transport control system according to the embodiment.
FIG. 3 is a block diagram for schematically showing an exemplary configuration of an AGV controller in the transport control system according to the embodiment.
FIG. 4 is a block diagram for schematically showing an exemplary configuration of an AGV according to the embodiment.
FIG. 5 is a diagram for showing an exemplary warehouse environment for which the transport control system according to the embodiment is adopted.
FIG. 6 is a transition diagram for showing an example of a rack retrieval by the AGV controller and AGV in the transport control system according to the embodiment.
FIG. 7 is a transition diagram for showing an example of a rack retrieval by the AGV controller and AGV in the transport control system according to the embodiment.
FIG. 8 is a transition diagram for showing an example of a rack retrieval by the AGV controller and AGV in the transport control system according to the embodiment.
FIG. 9 is a transition diagram for showing an example of rack sliding by the AGV controller and AGV in the transport control system according to the embodiment.
FIG. 10 is a transition diagram for showing an example of rack sliding by the AGV controller and AGV in the transport control system according to the embodiment.
FIG. 11 is a transition diagram for showing an example of rack sliding by the AGV controller and AGV in the transport control system according to the embodiment.
FIG. 12 is a transition diagram for showing an example of rack sliding by the AGV controller and AGV in the transport control system according to the embodiment.
FIG. 13 is a flowchart for showing an example of rack retrieving and rack sliding by the AGV controller in the transport control system according to the embodiment.

### DETAILED DESCRIPTION

Hereinafter, the embodiment will be described with reference to the drawings.

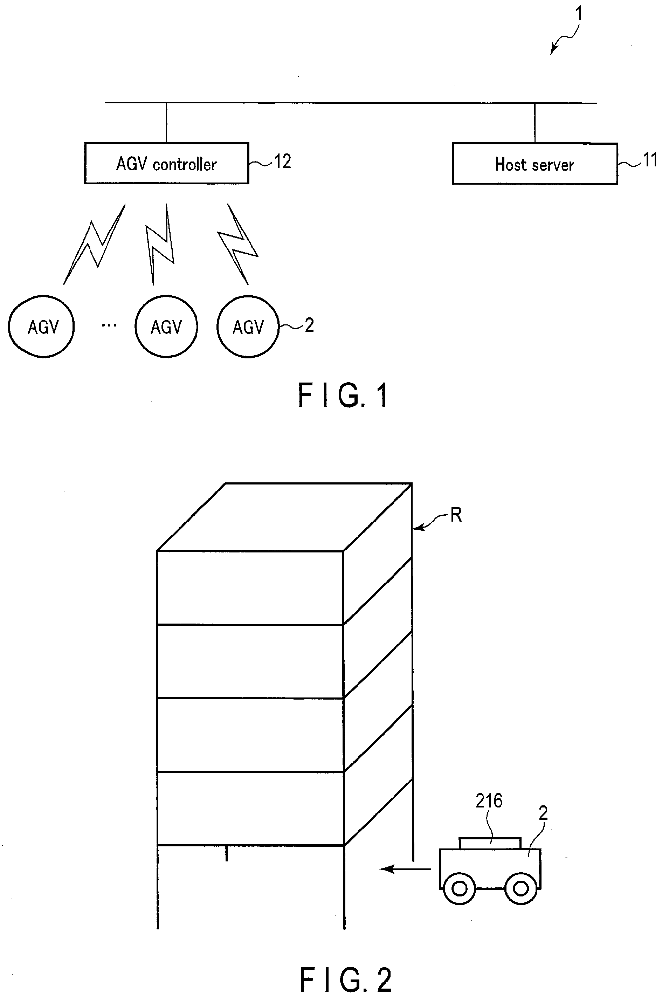

FIG. 1 is a diagram for schematically showing an exemplary configuration of a transport control system according to an embodiment.

As illustrated in FIG. 1, the transport control system 1 includes a host server 11 and an automated guided vehicle (AGV) controller 12 corresponding to a transport control device, where the AGV controller 12 controls an AGV 2, which corresponds to a transport vehicle. In this embodiment, the AGV controller 12 controls multiple AGVs **2.** If the warehouse has multiple floors, an AGV controller 12 may be provided for a respective floor so that the AGV controller 12 of each floor can control the AGVs 2 allocated for the floor.

The host server 11 can be realized by a single computer or by combining multiple computers. The host server 11 can communicate with other devices such as the AGV controller 12 in a wired or wireless manner, receive information from these devices or transmit a control signal or the like to the devices to control the devices. The host server 11 stores load information relating to objects such as loads, rack information relating to a rack containing one or more objects, AGV information relating to the AGVs 2, map data of the warehouse, and the like. The object information includes object identification information (ID) and the like, where each object has an object ID assigned. The rack information includes rack IDs and the like, where each rack has a rack ID assigned. The AGV information includes AGV IDs and the like, where each AGV 2 has an AGV ID assigned.

An object ID may be marked directly upon each object, or a tag on which an object ID is marked may be attached to each object. As a manner of marking the object ID, it may be printed visibly, or printed invisibly with an ink that absorbs infrared light. Alternatively, an electronic tag or wireless tag in which an object ID is stored may be attached to an object. An object ID includes at least identification information constituted by one selected from numerals, characters, symbols, a bar code, a two-dimensional code, and a QR code (trademark), or a combination of two or more selected therefrom. Similarly, a rack ID may be marked directly upon each rack, or a tag or the like on which a rack ID is marked may be attached to the rack. An AGV 2 has an AGV ID. The AGV ID may be marked directly on each AGV 2, or a tag or the like on which an AGV ID is marked may be attached to the AGV 2.

The transport control system 1 according to the embodiment includes a plurality of cameras for taking images inside the warehouse and a plurality of ID readers. The ID readers read object IDs, rack IDs, and AGV IDs. The host server 11 detects the position of each object, each rack and each AGV 2, and traces the move thereof, based on the warehouse map data, positional information of each camera and each ID reader on the map, an image taken by each camera, and an ID read by each ID reader. The host server 11 further draws up schedules regarding which AGV 2 moves which rack at which timing, in response to an object retrieval request.

In accordance with the schedule received from the host server 11, the AGV controller 12 transmits a control signal to each AGV 2 to control the travel of each AGV 2 and pickup and placement of a rack by the AGV 2. Pickup of a rack includes lifting, retrieving, and loading a rack. Placement of a rack includes lowering a lifted rack, releasing a retrieved rack, and dropping a loaded rack off. In the embodiment, a case of the AGV 2 picking up and moving a rack will be discussed. The transport control system according to the present embodiment is equally applicable to a case of the AGV 2 picking up and moving an object.

FIG. 2 is a diagram for showing an example of an AGV and a rack to be transported by the AGV in the transport control system according to the embodiment.

An AGV 2 is a wheeled, self-propelled robot, which, in response to a control signal from the AGV controller 12, travels toward a pickup position corresponding to a targeted rack R (e.g., directly under the rack R), picks up the targeted rack R at the pickup position, and travels toward a rack placement position. In response to the control signal from the AGV controller 12, the AGV 2 places the targeted rack R at the rack placement position corresponding to the targeted rack.

A rack R may stand upright with its four legs, with a height of the clearance under the rack (from the floor surface to the bottom of the rack) being larger than the height of an AGV 2. This allows the AGV 2 to duck under the rack. The AGV 2 that has ducked under the rack lifts the rack with the rack lifting mechanism 216 to the extent that the legs will be lifted several centimeters off the floor surface, and travels with the rack being lifted. In this manner, the AGV 2 can transport the rack.

For instance, the AGV 2 travels to the destination position, based on the map data, destination position data, and current position data. The AGV 2 travels to the destination position while detecting the moving distance and moving direction. Alternatively, the AGV 2 travels to the destination position while reading a magnetic tape or two-dimensional bar codes attached to the passageways. Furthermore, the AGV 2 may be provided with a laser detection sensor, a camera or the like to detect obstacles (including other AGVs 2) so as to travel while avoiding the obstacles detected by the laser detection sensor or the obstacles detected through analysis of images taken by the camera.

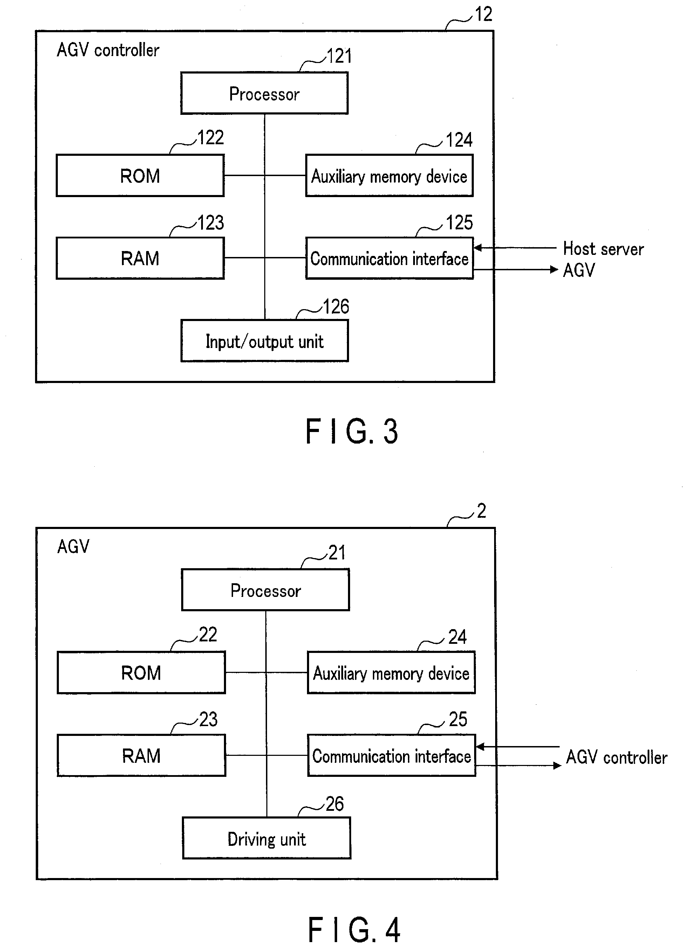

FIG. 3 is a block diagram for schematically showing an exemplary configuration of an AGV controller in the transport control system according to the embodiment.

The AGV controller 12 corresponds to a transport control device configured to control the travel of the AGV 2 and pickup and placement of a rack by the AGV 2. For instance, the AGV controller 12 controls the operations of the AGV 2 including traveling to the rack pickup position, picking the rack up, moving the rack to the rack placement position, and dropping the rack off at the rack placement position. As illustrated in FIG. 3, the AGV controller 12 includes a processor 121, a ROM 122, a RAM 123, an auxiliary memory device 124, a communication interface 125, and an input/output unit 126.

The processor 121 serves as the central portion of the computer configured to execute processing such as calculations and controls required for the travel of the AGVs 2 and the pickup and placement of racks by the AGVs 2. The processor 121 executes control to implement various functions of the AGV controller 12, based on the system software programs, application software programs, firmware programs stored in the ROM 122, auxiliary memory device 124 or the like. The processor 121 may be a central processing unit (CPU), a micro processing unit (MPU), or a digital signal processor (DSP). Alternatively, the processor 121 may be a combination of any of these.

The ROM 122 is a non-transitory computer-readable storage medium, serving as the main memory device of the computer having the processor 121 as the central unit. The ROM 122 is a nonvolatile memory exclusively used for data reading. The ROM 122 stores therein the above-mentioned programs. Furthermore, the ROM 122 stores data and various setting values used by the processor 121 for performing various kinds of processing.

The RAM 123 serves as the main memory device of the computer having the processor 121 as the central unit. The RAM 123 is a memory used for data reading and writing. The RAM 123 is used, for example, as what is called a work area to temporarily store data when the processor 121 performs various kinds of processing.

The auxiliary memory device 124 is a non-transitory computer-readable storage medium, serving as an auxiliary memory device of the computer having the processor 121 as the central unit. The auxiliary memory device 124 may store therein the above-mentioned programs. The auxiliary memory device 124 also stores the data used when the processor 121 performs various kinds of processing, as well as the data and various setting values produced through the processing of the processor 121.

The programs stored in the ROM 122 or auxiliary memory device 124 include a program for controlling the travel of the AGVs 2 and pickup and placement of racks by the AGVs 2. For instance, the AGV controller 12 may be transferred to a manager of the AGV controller 12 or the like with the programs stored in the ROM 122 or auxiliary memory device 124. Alternatively, the AGV controller 12 may also be transferred to the manager or the like with the programs not stored in the ROM 122 or auxiliary memory device 124. The programs may be separately transferred to the manager so that they can be written into the auxiliary memory device 124 under the manipulation of the manager or a service provider. The transfer of the programs may be realized, for example, through a removable storage medium such as a magnetic disk, a magneto-optical disk, an optical disk, or a semiconductor memory, or through downloading via a network or the like.

The communication interface 125 communicates via a network or the like with other devices such as the host server 11 and AGVs 2 in a wired or wireless manner, receives various kinds of information transmitted from these devices, and transmits various kinds of information to the devices. For instance, the communication interface 125 receives a schedule from the host server 11, and transmits to the AGVs 2 a control signal for controlling the travel of the AGVs.

The input/output unit 126 includes a keyboard, a numeric keyboard, a mouse, a touch panel display, and the like. The input/output unit 126 receives an instruction input by the operator, and informs the processor 121 of the instructions. The touch panel display presents to the operator various types of information.

FIG. 4 is a block diagram for schematically showing an exemplary configuration of an AGV according to the embodiment.

As illustrated in FIG. 4, the AGV 2 includes a processor 21, a ROM 22, a RAM 23, an auxiliary memory device 24, a communication interface 25, and a driving unit 26.

The processor 21 serves as the central portion of the computer configured to execute processing such as calculations and controls required for travel and pickup/drop-off of racks. The processor 21 executes control to implement various functions of the AGV 2, based on the system software programs, application software programs, and firmware programs stored in the ROM 22, auxiliary memory device 24 or the like. The processor 21 may be a CPU, MPU, or DSP. Alternatively, the processor 21 may be a combination of any of these. For instance, the AGV controller 12 transmits a control signal for moving the AGV 2 to a destination position, and the processor 21 outputs a drive signal corresponding to map data included in the control signal transmitted from the AGV controller 12, destination position data, and current position data. Alternatively, the processor 21 outputs a drive signal corresponding to a rack pickup and drop-off instruction included in the control signal transmitted from the AGV controller 12.

The ROM 22 is a non-transitory computer-readable storage medium, serving as the main memory device of the computer having the processor 21 as the central unit. The ROM 22 is a nonvolatile memory exclusively used for data reading. The ROM 22 stores therein the above-mentioned programs. Furthermore, the ROM 22 stores data and various setting values used by the processor 21 for performing various kinds of processing.

The RAM 23 serves as the main memory device of the computer having the processor 21 as the central unit. The RAM 23 is a memory used for data reading and writing. The RAM 23 is used, for example, as what is called a work area to temporarily store data when the processor 21 performs various kinds of processing.

The auxiliary memory device 24 is a non-transitory computer-readable storage medium, serving as an auxiliary memory device of the computer having the processor 21 as the central unit. The auxiliary memory device 24 may store therein the above-mentioned programs. The auxiliary memory device 24 also stores the data used when the processor 21 performs various kinds of processing, as well as data and various setting values produced through the processing of the processor 21.

The communication interface 25 communicates via a network or the like with other devices such as the AGV controller in a wireless manner, receives various types of information transmitted from these devices, and transmits various types of information to the devices. For instance, the communication interface 25 receives a control signal from the AGV controller 12. The communication interface 25 also transmits completion notices to the AGV controller 12 to report the completion of travel to the destination position, completion of a pickup of a rack, or completion of a placement of a rack.

The driving unit 26 includes wheels configured to be rotated by a motor, a steering mechanism for switching the traveling direction, a rack lifting mechanism configured to be vertically moved by a motor, and the like. In response to a drive signal output by the processor 21, the driving unit 26 rotates or stops the motor and controls the steering mechanism to move the AGV 2 to a destination position. With the AGV 2 ducking under the rack, the driving unit 26 rotates the motor (for a forward rotation) in response to a drive signal output by the processor 21 so that the rack lifting mechanism can ascend and lift the rack. After the AGV 2 reaches the destination position, the driving unit 26 rotates the motor (for an inverse rotation) in response to a drive signal output by the processor 21 so that the rack lifting mechanism can descend and place the rack down to the floor.

Next, the environment of the warehouse in which the AGVs 2 travels around will be described.

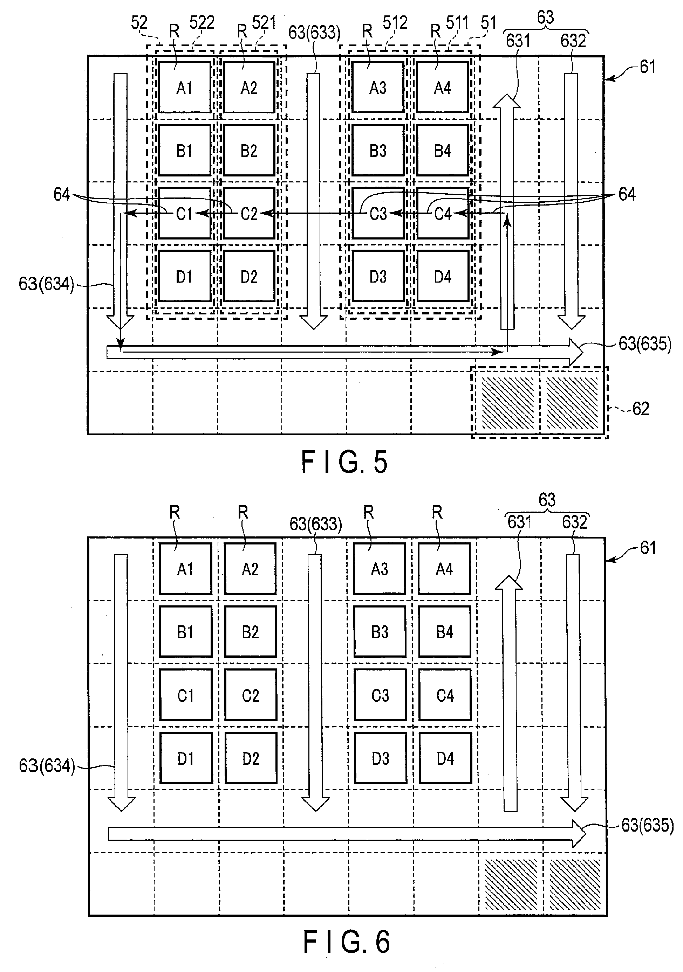

FIG. 5 is a diagram for showing an exemplary warehouse environment for which the transport control system according to the embodiment is adopted.

In the warehouse, a plurality of racks are aligned. A plurality of aligned racks form a row of racks, and a plurality of rows of racks form a group of racks. Groups of racks that are formed are positioned at predetermined intervals, and racks in one group are aligned at predetermined intervals.

For instance, as illustrated in FIG. 5, rack groups 51 and 52 are formed and positioned at predetermined intervals in the warehouse 61. The rack group 51 includes rack rows 511 and 512, where the rack row 511 includes racks A4, B4, C4, and D4, and the rack row 512 includes racks A3, B3, C3, and D3. Furthermore, the rack group 52 includes rack rows 521 and 522, where the rack row 521 includes racks A2, B2, C2, and D2, and the rack row 522 includes racks A1, B1, C1, and D1. A rack that can be any rack will be referred to as a "rack R".

The warehouse 61 includes an outer aisle 63 at the peripheries of the rack groups 51 and 52, under-rack aisles 64 under the racks R, and a pickup station 62 (rack area) where a rack R carried from the rack groups 51 and 52 by the AGV 2 is placed. Under each rack R, an under-rack aisle 64 is formed to allow the AGV 2 to pass.

The outer aisle 63 includes an outbound passageway 631, a return passageway 632 (first return passageway), a return passageway 633 (second return passageway), a return passageway 634 (second return passageway), and a return passageway 635 (second return passageway), each having a passageway width corresponding to a rack transported by an AGV 2.

The outbound passageway 631 is defined in the proximity of the rack row 511 (first rack row) of the rack group 51 (specific rack group), and the AGV 2 travels through this outbound passageway 631 from the pickup station 62 to a targeted rack R, which is included in the rack row 511 of the rack group 51 (outbound trip). The AGV 2 also travels through the outbound passageway 631 and under-rack aisle 64 from the pickup station 62 to a targeted rack R included in the rack row 512 of the rack group 51 or to a targeted rack R included in the rack row 521 or rack row 522 of the rack group 52 (outbound trip). The return passageway 632 is defined in the proximity of the rack row 511 (first rack row) of the rack group 51 (specific rack group), and the AGV 2 travels through this return passageway 632 from the targeted rack included in the rack row 511 to the pickup station 62 (return trip).

The return passageway 633 is defined in the proximity of the rack row 512 (second rack row) of the rack group 51, and the AGV 2 travels through this return passageway 633 and the return passageway 635 from the targeted rack included in the rack row 512 to the pickup station 62 (return trip). The return passageway 634 is defined in the proximity of the rack row 522 (second rack row) of the rack group 52, and the AGV 2 travels through this return passageway 634 and the return passageway 635 from the targeted rack included in the rack row 522 to the pickup station 62 (return trip). As described above, all of the outer aisles 63 are determined to have one-way traffic in order to avoid collisions of AGVs 2 and to simplify the transport management of the multiple AGVs 2. In addition, waiting of an AGV 2 for another AGV to pass can be reduced.

The auxiliary memory device 124 of the AGV controller 12 stores the map data of the warehouse 61, where the map data includes positional information relating to the racks R of the rack groups 51 and 52, pickup station 62, outer aisles 63, and under-rack aisles 64. The auxiliary memory device 124 further stores management information for managing the racks R and objects contained in each rack R. The management information includes rack information including rack IDs and object information including object IDs.

Next, rack retrieval and rack sliding by the transport control system according to the embodiment will be described.

For instance, the AGV controller 12 selects one or more AGVs 2 from multiple AGVs 2 in the warehouse 61. If one AGV 2 is selected, the AGV controller 12 transmits to the selected AGV 2 a first control signal including a rack retrieval instruction, a second control signal including a rack sliding instruction, and a third control signal including a rack returning instruction for returning the rack placed in the pickup station 62 to a vacant space. If multiple AGVs 2 are selected, the AGV controller 12 transmits the first control signal to one of the selected AGVs 2, and the second control signal to another one of the selected AGVs 2.

First, by referring to FIGS. 6 to 8, a rack retrieval will be described. FIGS. 6 to 8 are diagrams showing the transition of an exemplary rack retrieval by the transport control system according to the embodiment.

As illustrated in FIG. 6, it is assumed that the rack groups 51 and 52 are positioned side by side. The AGV controller 12 selects a single AGV 2 from multiple AGVs 2 in the warehouse 61, and instructs the selected AGV 2 to retrieve the rack C1. For instance, the processor 121 of the AGV controller 12 selects an AGV 2 on standby in the pickup station 62 and outputs a first control signal, and thereby the communication interface 125 transmits the first control signal to the selected AGV 2.

The first control signal controls the travel of the AGV 2 through the outbound passageway 631 and under-rack aisle 64 from the pickup station 62 to the pickup position corresponding to the rack C1 (e.g., directly below the rack C1), controls the pickup of the rack C1 by the AGV 2, controls the travel of the AGV 2 through the under-rack aisle 64, return passageway 634, and return passageway 635 from the pickup position corresponding to the rack C1 to the predetermined position of the pickup station 62, and controls the placement of the rack C1 at the predetermined position by the AGV 2.

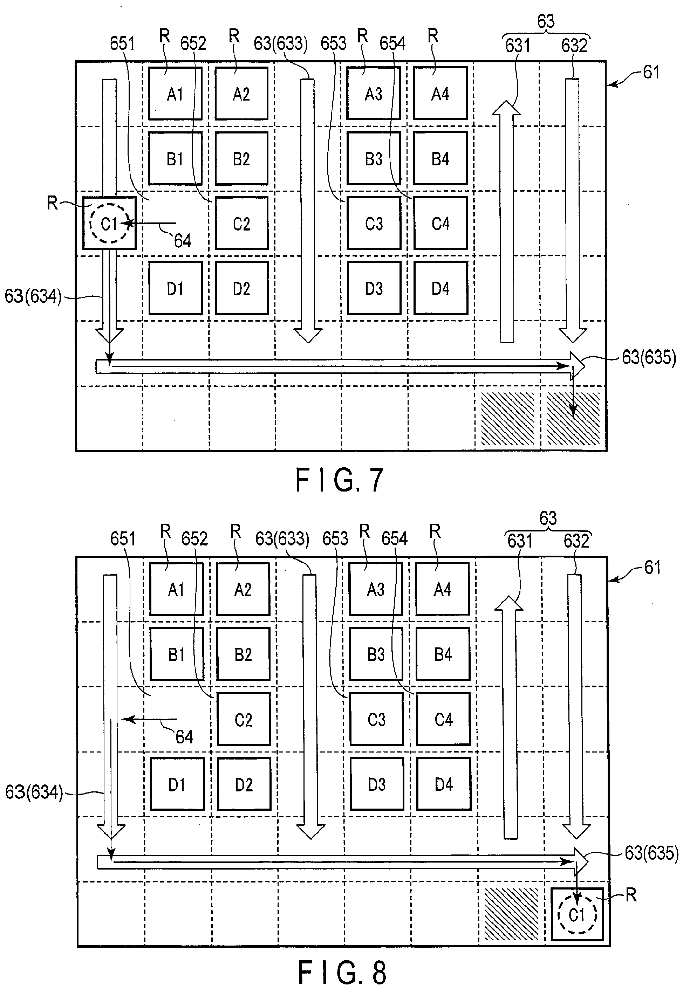

In accordance with the first control signal, the AGV 2 travels from the pickup station 62 to the pickup position corresponding to the rack C1 through the outbound passageway 631 (3 cells upward) and under-rack aisle 64 (5 cells leftward), where it lifts the rack C1 with the rack lifting mechanism 216, and completes the pickup of the rack C1. Furthermore, as illustrated in FIGS. 7 and 8, in accordance with the first control signal, the AGV 2 travels from the pickup position corresponding to the rack C1 to the predetermined position of the pickup station 62 through the under-rack aisle 64 (1 cell leftward), the return passageway 634 (2 cells downward), and the return passageway 635 (7 cells rightward and 1 cell downward), where it places the rack C1 at the predetermined position. As shown in FIGS. 7 and 8, the space 651 where the rack C1 of the rack group 52 was placed becomes a vacant space, created by the transport of the rack C1.

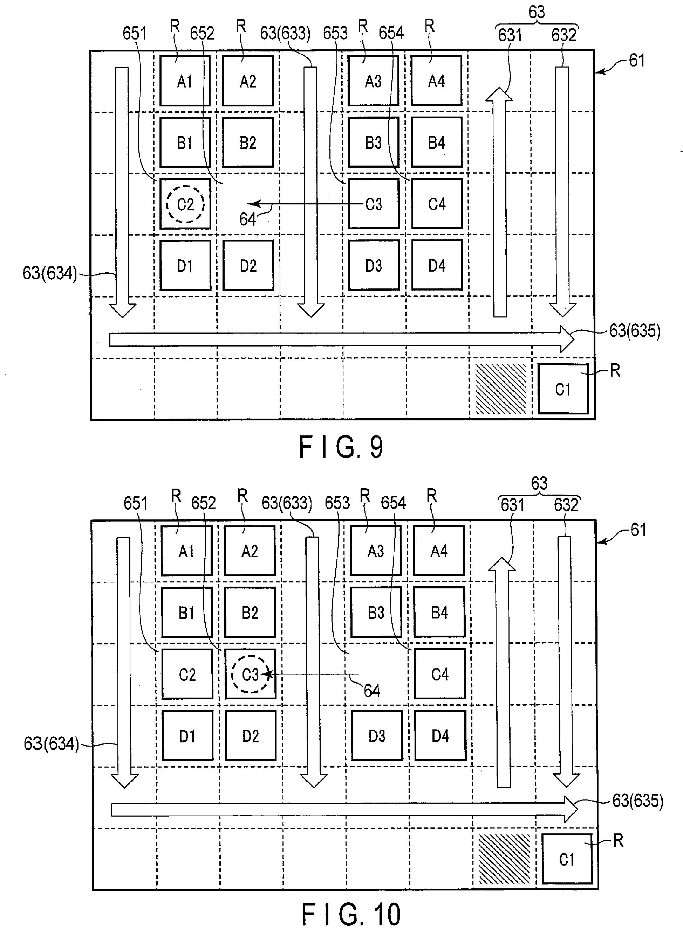

With reference to FIGS. 9 to 12, the rack sliding will now be described. FIGS. 9 to 12 are diagrams showing the transition of an exemplary rack sliding process in the transport control system according to the embodiment.

The AGV controller 12 selects a single AGV 2 or multiple AGVs 2 from the AGVs 2 in the warehouse 61, and instructs the selected AGV 2 to perform the rack sliding. The processor 121 of the AGV controller 12 determines, based on the operational state of each AGV 2 in the warehouse 61, whether to have a single AGV 2 perform a rack retrieval and rack sliding, or to have multiple AGVs 2 (first and second transport vehicles) perform a rack retrieval and rack sliding.

If a single AGV 2 (first transport vehicle) is slated to perform the rack retrieval and rack sliding, the processor 121 selects the same AGV 2 as the AGV 2 that transports the rack C1 in FIGS. 6 to 8. If two different AGVs 2 (first and second transport vehicles) are slated to perform the rack retrieval and rack sliding, the processor 121 selects AGVs 2 that differ from the AGV 2 carrying the rack C1 in FIGS. 6 to 8. Furthermore, if the rack sliding is performed multiple times, the processor 121 may determine, based on the operational state of each AGV 2 in the warehouse 61, whether to have the same AGV 2 perform the rack sliding multiple times, or to have different AGVs 2 perform the rack sliding multiple times, and then select AGVs 2.

When multiple AGVs 2 are selected, the rack sliding can be planned at the timing at which the rack retrieval is determined so that the rack sliding can be efficiently implemented. The AGV 2 for performing the rack sliding can be kept on standby near the vacant space before the vacant space is ready. In this manner, the rack sliding can be realized as soon as the vacant space is ready.

The processor 121 of the AGV controller 12 outputs a second control signal to perform rack sliding once or multiple times, and the communication interface 125 thereby transmits the second control signal to the selected AGV 2. For instance, the second control signal includes a signal for performing rack sliding by the AGV 2 to carry the rack C2, which was adjacent to the rack C1, to the space 651 so that the vacancy in the space 651 created by the transport of the rack C1 can be shifted to the adjacent space 652 to create a vacant space 652.

If a single AGV 2 on standby in the pickup station 62 is selected, the selected AGV 2 travels based on the second control signal through the outbound passageway 631 and under-rack aisle 64, from the pickup station 62 to the pickup position corresponding to the rack C2 adjacent to the rack C1, where it lifts the rack C2 with the rack lifting mechanism 216, and completes the pickup of the rack C2. As illustrated in FIG. 9, the AGV 2 transports the rack C2 from the pickup position to the space 651, and places the rack C2 in the space 651.

Furthermore, in accordance with the second control signal, the AGV 2 returns through the under-rack aisle 64 and return passageway 634 to the pickup station 62, and travels through the outbound passageway 631 and under-rack aisle 64 from the pickup station 62 to the pickup position corresponding to the rack C3 adjacent to the rack C2, where it lifts the rack C3 with the rack lifting mechanism 216, and completes the pickup of the rack C3. The AGV 2 transports the rack C3 from the space 653 to the space 652, and places the rack C3 in the space 652 (see FIG. 10). Alternatively, in accordance with the second control signal, the AGV 2 travels through the under-rack aisle 64 from the space 651 to the space 653, lifts the rack C3 with the rack lifting mechanism 216, completes the pickup of the rack C3, transports the rack C3 from the space 653 to the space 652, and places the rack C3 in the space 652 (see FIG. 10).

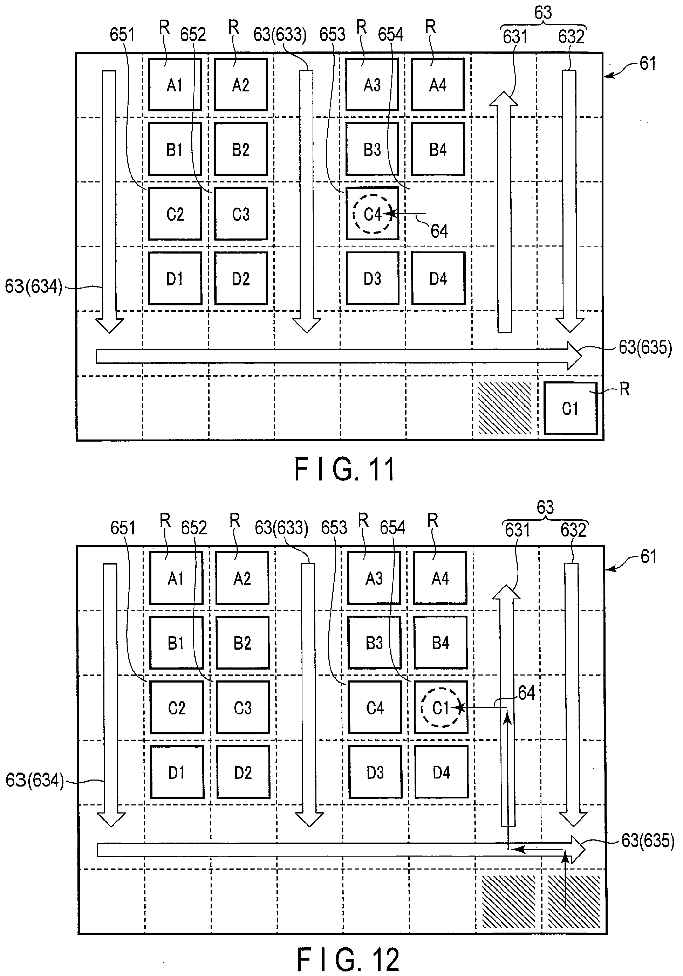

In accordance with the second control signal, the AGV 2 also returns through the under-rack aisle 64 and return passageway 634 to the pickup station 62, and travels through the outbound passageway 631 and under-rack aisle 64 from the pickup station 62 to the pickup position corresponding to the rack C4 adjacent to the rack C3, where it lifts the rack C4 with the rack lifting mechanism 216, and completes the pickup of the rack C4. The AGV 2 transports the rack C4 from the space 654 to the space 653, and places the rack C4 in the space 653 (see FIG. 11). Alternatively, in accordance with the second control signal, the AGV 2 travels through the under-rack aisle 64 from the space 652 to the space 654, lifts the rack C4 with the rack lifting mechanism 216, completes the pickup of the rack C4, transports the rack C4 from the space 654 to the space 653, and places the rack C4 in the space 653 (see FIG. 11). In the above manner, the vacancy in the space 651 can be shifted over to a targeted position (i.e., the rack row 511 of the rack group 51 closest to the pickup station 62).

In accordance with the third control signal, the AGV 2 travels through the under-rack aisle 64 and return passageway 634 to the pickup position corresponding to the rack C1 of the pickup station 62, where it lifts the rack C1 with the rack lifting mechanism 216 and completes the pickup of the rack C1. The AGV 2 transports the rack C1 from the pickup position to the space 654 through the outbound passageway 631, and places the rack C1 in the space 654 (see FIG. 12). In the above manner, the retrieved rack C1 can be replaced in the rack row 511 of the rack group 51 closest to the pickup station 62.

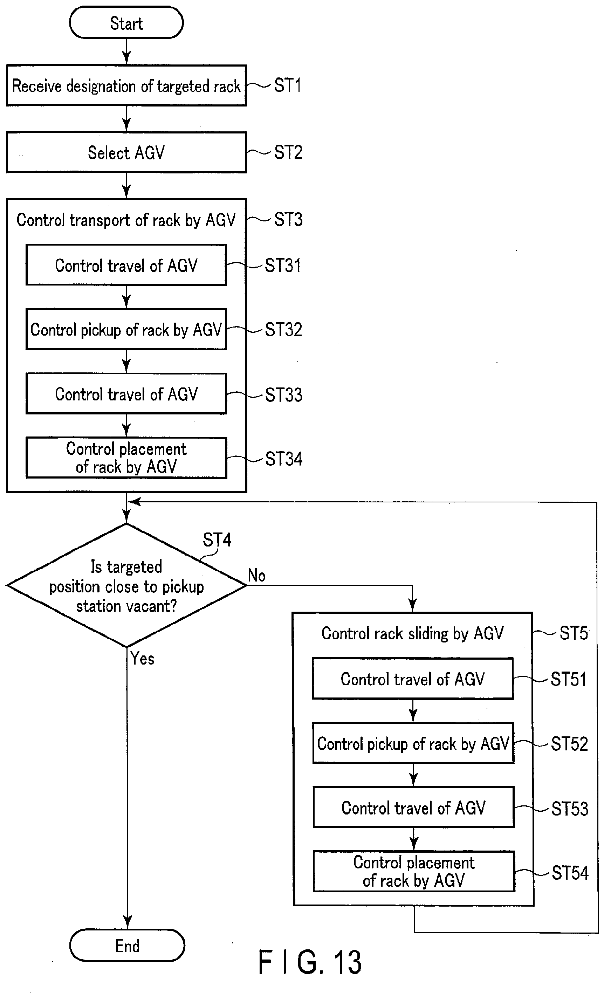

FIG. 13 is a flowchart showing exemplary rack retrieving and rack sliding operations in the transport control system according to the embodiment.

For instance, the host server 11 designates a targeted rack to be retrieved from groups of racks, and the communication interface 125 of the AGV controller 12 receives the designation of the targeted rack (ST1). Based on the operational states of the AGVs 2, the processor 121 selects one or more AGVs 2 slated to control the transport of a rack and sliding of the rack (ST2), and generates a first control signal for controlling the transport of a rack and a second control signal for controlling the sliding of the rack. The communication interface 125 transmits the first control signal to the selected AGV 2, and transmits the second control signal to the selected AGV 2. The AGVs 2 to which the first and second control signals are transmitted may be the same AGV 2, or different AGVs 2.

The processor 121 of the AGV controller 12 transmits the first control signal to the selected AGV 2 via the communication interface 125 to control the transport of the rack (ST3), and transmits the second control signal to the selected AGV 2 via the communication interface 125 to control the rack sliding (ST5).

That is, the processor 121 controls the travel of the AGV 2 to a targeted rack with the first control signal (ST31), controls the pickup of the targeted rack by the AGV 2 (ST32), controls the travel of the AGV 2 toward the pickup station 62 (ST33), and controls the placement of the targeted rack in the pickup station 62 by the AGV 2 (ST34).

If the targeted position (e.g., the rack row 511 of the rack group 51 closest to the pickup station 62) does not become vacant under the control of the rack transport at ST3 (no at ST4), the processor 121 controls the travel of the AGV 2 toward a sliding-targeted rack, which is adjacent to the transported rack, using the second control signal (ST51), the pickup of the sliding-targeted rack by the AGV 2 (ST52), the travel of the AGV 2 toward the vacant space (ST53), and the placement of the sliding-targeted rack in the vacant space by the AGV 2 (ST54).

If the targeted position does not become vacant (no at ST4), the rack sliding is repeated (ST5). If the targeted position becomes vacant (yes at ST4), the processing is terminated.

As described above, the embodiment offers the transport control device, transport control method, and program, which can improve efficiency in storing, retrieving and replacing objects.

By suitably laying out the outer aisles 63, racks can be placed at high density, allowing for effective use of the warehouse space. When retrieving a rack, one-way traffic (e.g., counterclockwise traffic) may be adopted for AGVs 2 to enhance the efficiency of rack retrieval. Furthermore, with the rack sliding, a vacant space can be created in the rack row 511 of the rack group 51 closest to the pickup station 62, and the rack carried to the pickup station 62 can be efficiently returned to the rack group 51. In addition, with rack sliding, less frequently used racks are gathered in the rack group 52 (and in the rack row 522) further away from the pickup station 62, while frequently used racks are gathered in the rack group 51 (and in the rack row 511) closer to the pickup station 62, which enhances the efficiency of rack retrieval.

## Claims

1. A transport control device (12) comprising:
a storage unit (124) configured to store positional information relating to racks (R) included in a plurality of rack groups (51, 52) provided at predetermined intervals, an outer aisle (63) around the rack groups (51, 52), an under-rack aisle (64) under each of the racks (R), and a rack area (62) in which a rack retrieved from the rack groups (51, 52) by a transport vehicle (2) is placed, and management information for managing the racks (R);
a control unit configured to output a control signal for controlling the transport vehicle (2) based on the positional information and the management information; and
a communication unit configured to transmit the control signal to the transport vehicle (2),
wherein each of the rack groups (51, 52) includes a first rack row (511) and a second rack row (512),
the outer aisle (63) includes an outbound passageway (631), a first return passageway (632), and a second return passageway (633, 634, 635), the outbound passageway (631) and the first return passageway (632) being in proximity to the first rack row (511) in a predetermined rack group of the rack groups (51, 52), and the second return passageway (633, 634, 635) being in proximity to the second rack row (512) of each of the rack groups (51, 52), and
the control unit outputs a first control signal for controlling a travel of the transport vehicle (2) toward a first pickup position corresponding to a first rack included in the rack groups (51, 52), controlling a pickup of the first rack by the transport vehicle (2), and controlling the travel of the transport vehicle (2) by way of the first or second return passageway (633, 634, 635) from the first pickup position to the rack area (62),
**characterized in that** the control unit further outputs a second control signal for performing rack sliding once or a plurality of times, wherein in the rack sliding, a second rack previously adjacent to the first rack is transported by the transport vehicle (2) to a vacant space (652) created after transport of the first rack, and
the second control signal includes a signal for repeating the rack sliding until the vacant space (652) moves to a position included in the first rack row (511) of the predetermined rack group.

2. The transport control device (12) according to claim 1, wherein
the second control signal includes a signal for controlling the travel of the transport vehicle (2) toward a second pickup position corresponding to the second rack, controlling a pickup of the second rack by the transport vehicle (2), controlling the travel of the transport vehicle (2) from the second pickup position to the first pickup position, and controlling a placement of the second rack at the first pickup position by the transport vehicle (2).

3. The transport control device (12) according to claim 1 or 2, wherein
the predetermined rack group is a rack group closest to the rack area (62) among the rack groups (51, 52).

4. The transport control device (12) according to claim 1, wherein
in the case where the transport vehicle (2) is instructed to travel to the first rack included in the second rack row (512), the first control signal includes a signal for controlling the travel of the transport vehicle (2) under an under-rack aisle (64) under racks (R) included in the first rack row (511).

5. The transport control device (12) according to any one of claims 1 to 4, wherein
the communication unit transmits the first control signal to a first transport vehicle, and transmits the second control signal to a second transport vehicle.

6. The transport control device (12) according to claim 1 or 2, wherein
the control unit outputs a third control signal for controlling the travel of the transport vehicle (2) toward a third pickup position corresponding to the first rack in the rack area (62), controlling the pickup of the first rack by the transport vehicle (2), and controlling the travel of the transport vehicle (2) by way of the outbound passageway (631) from the third pickup position to the vacant space (652) included in the predetermined rack group.

7. A transport control method, comprising:
outputting a control signal for controlling a transport vehicle (2) based on positional information relating to racks (R) included in a plurality of rack groups (51, 52) provided at predetermined intervals, an outer aisle (63) around the rack groups (51, 52), an under-rack aisle (64) under each of the racks (R), and a rack area (62) in which a rack retrieved from the rack groups (51, 52) by the transport vehicle (2) is placed, and management information for managing the racks (R); and
transmitting the control signal to the transport vehicle (2), wherein
each of the rack groups (51, 52) includes a first rack row (511) and a second rack row (512),
the outer aisle (63) includes an outbound passageway (631), a first return passageway (632), and a second return passageway (633, 634, 635), the outbound passageway (631) and the first return passageway (632) being in proximity to the first rack row (511) in a predetermined rack group of the rack groups (51, 52), and the second return passageway (633, 634, 635) being in proximity to the second rack row (512) of each of the rack groups (51, 52), and
the method further comprises:
outputting a first control signal for controlling a travel of the transport vehicle (2) toward a first pickup position corresponding to a first rack included in the rack group (51, 52), controlling a pickup of the first rack by the transport vehicle (2), and controlling the travel of the transport vehicle (2) by way of the first or second return passageway (633, 634, 635) from the first pickup position to the rack area (62),
**characterized in that** the method further comprises outputting a second control signal for performing rack sliding once or a plurality of times, wherein in the rack sliding a second rack previously adjacent to the first rack is transported by the transport vehicle (2) to a vacant space (652) created after transport of the first rack, and
the second control signal includes a signal for repeating the rack sliding until the vacant space (652) moves to a position included in the first rack row (511) of the predetermined rack group.

8. A computer program comprising instructions which, when the program is executed by a computer, cause the computer to:
outputting a control signal for controlling a transport vehicle (2) based on positional information relating to racks (R) included in a plurality of rack groups (51, 52) provided at predetermined intervals, an outer aisle (63) around the rack groups (51, 52), an under-rack aisle (64) under each of the racks (R), and a rack area (62) in which a rack retrieved from the rack groups (51, 52) by the transport vehicle (2) is placed, and management information for managing the racks (R); and
transmitting the control signal to the transport vehicle (2), wherein
each of the rack groups (51, 52) includes a first rack row (511) and a second rack row (512),
the outer aisle (63) includes an outbound passageway (631), a first return passageway (632), and a second return passageway (633, 634, 635), the outbound passageway (631) and the first return passageway (632) being in proximity to the first rack row (511) in a predetermined rack group of the rack groups (51, 52), and the second return passageway (633, 634, 635) being in proximity to the second rack row (512) of each of the rack groups (51, 52), and
the program causes the computer to further implement:
outputting a first control signal for controlling a travel of the transport vehicle (2) toward a first pickup position corresponding to a first rack included in the rack group (51, 52), controlling a pickup of the first rack by the transport vehicle (2), and controlling the travel of the transport vehicle (2) by way of the first or second return passageway (633, 634, 635) from the first pickup position to the rack area (62),
**characterized in that** the program further causes the computer to implement outputting a second control signal for performing rack sliding once or a plurality of times, wherein in the rack sliding a second rack previously adjacent to the first rack is transported by the transport vehicle (2) to a vacant space (652) created after transport of the first rack, and
the second control signal includes a signal for repeating the rack sliding until the vacant space (652) moves to a position included in the first rack row (511) of the predetermined rack group.

## Patentansprüche

1. Transportsteuervorrichtung (12), aufweisend:
eine Speichereinheit (124), die eingerichtet ist, Positionsinformationen zu speichern, die sich auf Regale (R) beziehen, die in mehreren Regalgruppen (51, 52) enthalten sind, die in vorbestimmten Intervallen bereitgestellt sind, einen äußeren Gang (63) um die Regalgruppen (51, 52), einen Unter-Regal-Gang (64) unter jedem der Regale (R) und einen Regalbereich (62), in dem ein Regal, das von einem Transportfahrzeug (2) aus den Regalgruppen (51, 52) entnommen wird, platziert ist, und Verwaltungsinformationen zum Verwalten der Regale (R);
eine Steuereinheit, die eingerichtet ist, ein Steuersignal zum Steuern des Transportfahrzeugs (2) basierend auf den Positionsinformationen und den Verwaltungsinformationen auszugeben; und
eine Kommunikationseinheit, die eingerichtet ist, das Steuersignal an das Transportfahrzeug (2) zu übertragen,
wobei jede der Regalgruppen (51, 52) eine erste Regalreihe (511) und eine zweite Regalreihe (512) aufweist,
der äußere Gang (63) einen abgehenden Durchgang (631), einen ersten Rückkehrdurchgang (632) und einen zweiten Rückkehrdurchgang (633, 634, 635) aufweist, wobei der abgehende Durchgang (631) und der erste Rückkehrdurchgang (632) in der Nähe der ersten Regalreihe (511) in einer vorbestimmten Regalgruppe der Regalgruppen (51, 52) sind und der zweite Rückkehrdurchgang (633, 634, 635) in der Nähe der zweiten Regalreihe (512) jeder der Regalgruppen (51, 52) ist, und
die Steuereinheit ein erstes Steuersignal zum Steuern einer Fahrt des Transportfahrzeugs (2) zu einer ersten Aufnahmeposition, die einem ersten Regal entspricht, das in den Regalgruppen (51, 52) enthalten ist, zum Steuern einer Aufnahme des ersten Regals durch das Transportfahrzeug (2) und zum Steuern der Fahrt des Transportfahrzeugs (2) mittels des ersten oder zweiten Rückkehrdurchgangs (633, 634, 635) von der ersten Aufnahmeposition zu dem Regalbereich (62) ausgibt,
**dadurch gekennzeichnet, dass** die Steuereinheit ferner ein zweites Steuersignal zum einmaligen oder mehrmaligen Durchführen eines Regalgleitens ausgibt, wobei bei dem Regalgleiten ein zweites Regal, das zuvor an das erste Regal angrenzt, durch das Transportfahrzeug (2) zu einem freien Raum (652) transportiert wird, der nach dem Transport des ersten Regals erzeugt wird, und
das zweite Steuersignal ein Signal zum Wiederholen des Regalgleitens aufweist, bis sich der freie Raum (652) zu einer Position bewegt, die in der ersten Regalreihe (511) der vorbestimmten Regalgruppe enthalten ist.

2. Transportsteuervorrichtung (12) nach Anspruch 1, wobei
das zweite Steuersignal ein Signal zum Steuern der Fahrt des Transportfahrzeugs (2) zu einer zweiten Aufnahmeposition, die dem zweiten Regal entspricht, zum Steuern einer Aufnahme des zweiten Regals durch das Transportfahrzeug (2), zum Steuern der Fahrt des Transportfahrzeugs (2) von der zweiten Aufnahmeposition zu der ersten Aufnahmeposition und zum Steuern einer Platzierung des zweiten Regals an der ersten Aufnahmeposition durch das Transportfahrzeug (2) aufweist.

3. Transportsteuervorrichtung (12) nach Anspruch 1 oder 2, wobei
die vorbestimmte Regalgruppe eine Regalgruppe ist, die dem Regalbereich (62) unter den Regalgruppen (51, 52) am nächsten ist.

4. Transportsteuervorrichtung (12) nach Anspruch 1, wobei
in dem Fall, in dem das Transportfahrzeug (2) angewiesen wird, zu dem ersten Regal zu fahren, das in der zweiten Regalreihe (512) enthalten ist, das erste Steuersignal ein Signal zum Steuern der Fahrt des Transportfahrzeugs (2) unter einem Unter-Regal-Gang (64) unter Regalen (R) aufweist, die in der ersten Regalreihe (511) enthalten sind.

5. Transportsteuervorrichtung (12) nach einem der Ansprüche 1 bis 4, wobei
die Kommunikationseinheit das erste Steuersignal an ein erstes Transportfahrzeug überträgt und das zweite Steuersignal an ein zweites Transportfahrzeug überträgt.

6. Transportsteuervorrichtung (12) nach Anspruch 1 oder 2, wobei
die Steuereinheit ein drittes Steuersignal zum Steuern der Fahrt des Transportfahrzeugs (2) zu einer dritten Aufnahmeposition, die dem ersten Regal in dem Regalbereich (62) entspricht, zum Steuern der Aufnahme des ersten Regals durch das Transportfahrzeug (2) und zum Steuern der Fahrt des Transportfahrzeugs (2) mittels des abgehenden Durchgangs (631) von der dritten Aufnahmeposition zu dem freien Raum (652) ausgibt, der in der vorbestimmten Regalgruppe enthalten ist.

7. Transportsteuerverfahren, aufweisend:
Ausgeben eines Steuersignals zum Steuern eines Transportfahrzeugs (2) basierend auf Positionsinformationen, die sich auf Regale (R) beziehen, die in mehreren Regalgruppen (51, 52) enthalten sind, die in vorbestimmten Intervallen bereitgestellt sind, einen äußeren Gang (63) um die Regalgruppen (51, 52), einen Unter-Regal-Gang (64) unter jedem der Regale (R) und einen Regalbereich (62), in dem ein Regal, das von dem Transportfahrzeug (2) aus den Regalgruppen (51, 52) entnommen wird, platziert ist, und Verwaltungsinformationen zum Verwalten der Regale (R); und
Übertragen des Steuersignals an das Transportfahrzeug (2), wobei
jede der Regalgruppen (51, 52) eine erste Regalreihe (511) und eine zweite Regalreihe (512) aufweist,
der äußere Gang (63) einen abgehenden Durchgang (631), einen ersten Rückkehrdurchgang (632) und einen zweiten Rückkehrdurchgang (633, 634, 635) aufweist, wobei der abgehende Durchgang (631) und der erste Rückkehrdurchgang (632) in der Nähe der ersten Regalreihe (511) in einer vorbestimmten Regalgruppe der Regalgruppen (51, 52) sind und der zweite Rückkehrdurchgang (633, 634, 635) in der Nähe der zweiten Regalreihe (512) jeder der Regalgruppen (51, 52) ist, und
das Verfahren ferner Folgendes aufweist:
Ausgeben eines ersten Steuersignals zum Steuern einer Fahrt des Transportfahrzeugs (2) zu einer ersten Aufnahmeposition, die einem ersten Regal entspricht, das in der Regalgruppe (51, 52) enthalten ist, zum Steuern einer Aufnahme des ersten Regals durch das Transportfahrzeug (2) und zum Steuern der Fahrt des Transportfahrzeugs (2) mittels des ersten oder zweiten Rückkehrdurchgangs (633, 634, 635) von der ersten Aufnahmeposition zu dem Regalbereich (62),
**dadurch gekennzeichnet, dass** das Verfahren ferner das einmalige oder mehrmalige Ausgeben eines zweiten Steuersignals zum Durchführen eines Regalgleitens aufweist, wobei bei dem Regalgleiten ein zweites Regal, das zuvor an das erste Regal angrenzt, durch das Transportfahrzeug (2) zu einem freien Raum (652) transportiert wird, der nach dem Transport des ersten Regals erzeugt wird, und
das zweite Steuersignal ein Signal zum Wiederholen des Regalgleitens aufweist, bis sich der freie Raum (652) zu einer Position bewegt, die in der ersten Regalreihe (511) der vorbestimmten Regalgruppe enthalten ist.

8. Computerprogramm, mit Anweisungen, die, wenn das Programm durch einen Computer ausgeführt wird, den Computer veranlassen zum:
Ausgeben eines Steuersignals zum Steuern eines Transportfahrzeugs (2) basierend auf Positionsinformationen, die sich auf Regale (R) beziehen, die in mehreren Regalgruppen (51, 52) enthalten sind, die in vorbestimmten Intervallen bereitgestellt sind, einen äußeren Gang (63) um die Regalgruppen (51, 52), einen Unter-Regal-Gang (64) unter jedem der Regale (R) und einen Regalbereich (62), in dem ein Regal, das von dem Transportfahrzeug (2) aus den Regalgruppen (51, 52) entnommen wird, platziert ist, und Verwaltungsinformationen zum Verwalten der Regale (R); und
Übertragen des Steuersignals an das Transportfahrzeug (2), wobei
jede der Regalgruppen (51, 52) eine erste Regalreihe (511) und eine zweite Regalreihe (512) aufweist,
der äußere Gang (63) einen abgehenden Durchgang (631), einen ersten Rückkehrdurchgang (632) und einen zweiten Rückkehrdurchgang (633, 634, 635) aufweist, wobei der abgehende Durchgang (631) und der erste Rückkehrdurchgang (632) in der Nähe der ersten Regalreihe (511) in einer vorbestimmten Regalgruppe der Regalgruppen (51, 52) sind und der zweite Rückkehrdurchgang (633, 634, 635) in der Nähe der zweiten Regalreihe (512) jeder der Regalgruppen (51, 52) ist, und
das Programm den Computer veranlasst, ferner zu implementieren:
Ausgeben eines ersten Steuersignals zum Steuern einer Fahrt des Transportfahrzeugs (2) zu einer ersten Aufnahmeposition, die einem ersten Regal entspricht, das in der Regalgruppe (51, 52) enthalten ist, zum Steuern einer Aufnahme des ersten Regals durch das Transportfahrzeug (2) und zum Steuern der Fahrt des Transportfahrzeugs (2) mittels des ersten oder zweiten Rückkehrdurchgangs (633, 634, 635) von der ersten Aufnahmeposition zu dem Regalbereich (62),
**dadurch gekennzeichnet, dass** das Programm ferner den Computer veranlasst, das einmalige oder mehrmalige Ausgeben eines zweiten Steuersignals zum Durchführen eines Regalgleitens zu implementieren, wobei bei dem Regalgleiten ein zweites Regal, das zuvor an das erste Regal angrenzt, durch das Transportfahrzeug (2) zu einem freien Raum (652) transportiert wird, der nach dem Transport des ersten Regals erzeugt wird, und
das zweite Steuersignal ein Signal zum Wiederholen des Regalgleitens aufweist, bis sich der freie Raum (652) zu einer Position bewegt, die in der ersten Regalreihe (511) der vorbestimmten Regalgruppe enthalten ist.

## Revendications

1. Dispositif de commande de transport (12) comprenant :
une unité de stockage (124) configurée pour stocker des informations de position concernant des étagères (R) incluses dans une pluralité de groupes d'étagères (51, 52) prévus à des intervalles prédéterminés, une allée extérieure (63) autour des groupes d'étagères (51, 52), une allée sous étagère (64) sous chacune des étagères (R), et une zone d'étagère (62) dans laquelle une étagère récupérée à partir des groupes d'étagères (51, 52) par un véhicule de transport (2) est placée, et des informations de gestion pour gérer les étagères (R) ;
une unité de commande configurée pour délivrer en sortie un signal de commande pour commander le véhicule de transport (2) sur la base des informations de position et des informations de gestion ; et
une unité de communication configurée pour transmettre le signal de commande au véhicule de transport (2),
dans lequel chacun des groupes d'étagères (51, 52) inclut une première rangée d'étagères (511) et une seconde rangée d'étagères (512),
l'allée extérieure (63) inclut un passage de sortie (631), un premier passage de retour (632), et un second passage de retour (633, 634, 635), le passage de sortie (631) et le premier passage de retour (632) étant à proximité de la première rangée d'étagères (511) dans un groupe d'étagères prédéterminé des groupes d'étagères (51, 52), et le second passage de retour (633, 634, 635) étant à proximité de la seconde rangée d'étagères (512) de chacun des groupes d'étagères (51, 52), et
l'unité de commande délivre en sortie un premier signal de commande pour commander un déplacement du véhicule de transport (2) vers une première position de ramassage correspondant à une première étagère incluse dans les groupes d'étagères (51, 52), commander un ramassage de la première étagère par le véhicule de transport (2), et commander le déplacement du véhicule de transport (2) au moyen du premier ou du second passage de retour (633, 634, 635) de la première position de ramassage à la zone d'étagère (62),
**caractérisé en ce que** l'unité de commande délivre en outre un second signal de commande pour effectuer un glissement d'étagère une fois ou une pluralité de fois, dans lequel, lors du glissement d'étagère, une seconde étagère précédemment adjacente à la première étagère est transportée par le véhicule de transport (2) jusqu'à un espace libre (652) créé après le transport de la première étagère, et
le second signal de commande inclut un signal pour répéter le glissement d'étagère jusqu'à ce que l'espace libre (652) se déplace jusqu'à une position incluse dans la première rangée d'étagères (511) du groupe d'étagères prédéterminé.

2. Dispositif de commande de transport (12) selon la revendication 1, dans lequel
le second signal de commande inclut un signal pour commander le déplacement du véhicule de transport (2) vers une seconde position de ramassage correspondant à la seconde étagère, commander un ramassage de la seconde étagère par le véhicule de transport (2), commander le déplacement du véhicule de transport (2) de la seconde position de ramassage à la première position de ramassage, et commander un placement de la seconde étagère à la première position de ramassage par le véhicule de transport (2).

3. Dispositif de commande de transport (12) selon la revendication 1 ou 2, dans lequel
le groupe d'étagères prédéterminé est un groupe d'étagères le plus proche de la zone d'étagère (62) parmi les groupes d'étagères (51, 52).

4. Dispositif de commande de transport (12) selon la revendication 1, dans lequel
dans le cas où le véhicule de transport (2) reçoit l'instruction de se déplacer jusqu'à la première étagère incluse dans la seconde rangée d'étagères (512), le premier signal de commande inclut un signal pour commander le déplacement du véhicule de transport (2) sous une allée sous étagères (64) sous des étagères (R) incluses dans la première rangée d'étagères (511).

5. Dispositif de commande de transport (12) selon l'une quelconque des revendications 1 à 4, dans lequel
l'unité de communication transmet le premier signal de commande à un premier véhicule de transport, et transmet le second signal de commande à un second véhicule de transport.

6. Dispositif de commande de transport (12) selon la revendication 1 ou 2, dans lequel
l'unité de commande délivre en sortie un troisième signal de commande pour commander le déplacement du véhicule de transport (2) vers une troisième position de ramassage correspondant à la première étagère dans la zone d'étagère (62), commander le ramassage de la première étagère par le véhicule de transport (2), et commander le déplacement du véhicule de transport (2) au moyen du passage de sortie (631) de la troisième position de ramassage à l'espace libre (652) inclus dans le groupe d'étagères prédéterminé.

7. Procédé de commande de transport, comprenant :
la délivrance en sortie d'un signal de commande pour commander un véhicule de transport (2) sur la base d'informations de position concernant des étagères (R) incluses dans une pluralité de groupes d'étagères (51, 52) prévus à des intervalles prédéterminés, une allée extérieure (63) autour des groupes d'étagères (51, 52), une allée sous étagère (64) sous chacune des étagères (R), et une zone d'étagère (62) dans laquelle une étagère récupérée à partir des groupes d'étagères (51, 52) par le véhicule de transport (2) est placée, et des informations de gestion pour gérer les étagères (R) ; et
la transmission du signal de commande au véhicule de transport (2), dans lequel
chacun des groupes d'étagères (51, 52) inclut une première rangée d'étagères (511) et une seconde rangée d'étagères (512),
l'allée extérieure (63) inclut un passage de sortie (631), un premier passage de retour (632), et un second passage de retour (633, 634, 635), le passage de sortie (631) et le premier passage de retour (632) étant à proximité de la première rangée d'étagères (511) dans un groupe d'étagères prédéterminé des groupes d'étagères (51, 52), et le second passage de retour (633, 634, 635) étant à proximité de la seconde rangée d'étagères (512) de chacun des groupes d'étagères (51, 52), et
le procédé comprend en outre :
la délivrance en sortie d'un premier signal de commande pour commander un déplacement du véhicule de transport (2) vers une première position de ramassage correspondant à une première étagère incluse dans le groupe d'étagères (51, 52), commander un ramassage de la première étagère par le véhicule de transport (2), et commander le déplacement du véhicule de transport (2) au moyen du premier ou du second passage de retour (633, 634, 635) de la première position de ramassage à la zone d'étagère (62),
**caractérisé en ce que** le procédé comprend en outre la délivrance en sortie d'un second signal de commande pour effectuer un glissement d'étagère une fois ou une pluralité de fois, dans lequel, lors du glissement d'étagère, une seconde étagère précédemment adjacente à la première étagère est transportée par le véhicule de transport (2) jusqu'à un espace libre (652) créé après le transport de la première étagère, et
le second signal de commande inclut un signal pour répéter le glissement d'étagère jusqu'à ce que l'espace libre (652) se déplace jusqu'à une position incluse dans la première rangée d'étagères (511) du groupe d'étagères prédéterminé.

8. Programme informatique comprenant des instructions qui, lorsque le programme est exécuté par un ordinateur, amènent l'ordinateur à :
délivrer en sortie un signal de commande pour commander un véhicule de transport (2) sur la base d'informations de position concernant des étagères (R) incluses dans une pluralité de groupes d'étagères (51, 52) prévus à des intervalles prédéterminés, une allée extérieure (63) autour des groupes d'étagères (51, 52), une allée sous étagère (64) sous chacune des étagères (R), et une zone d'étagère (62) dans laquelle une étagère récupérée à partir des groupes d'étagères (51, 52) par le véhicule de transport (2) est placée, et des informations de gestion pour gérer les étagères (R) ; et
transmettre le signal de commande au véhicule de transport (2), dans lequel
chacun des groupes d'étagères (51, 52) inclut une première rangée d'étagères (511) et une seconde rangée d'étagères (512),
l'allée extérieure (63) inclut un passage de sortie (631), un premier passage de retour (632), et un second passage de retour (633, 634, 635), le passage de sortie (631) et le premier passage de retour (632) étant à proximité de la première rangée d'étagères (511) dans un groupe d'étagères prédéterminé des groupes d'étagères (51, 52), et le second passage de retour (633, 634, 635) étant à proximité de la seconde rangée d'étagères (512) de chacun des groupes d'étagères (51, 52), et
le programme amène l'ordinateur à mettre en outre en œuvre :
la délivrance en sortie d'un premier signal de commande pour commander un déplacement du véhicule de transport (2) vers une première position de ramassage correspondant à une première étagère incluse dans le groupe d'étagères (51, 52), commander un ramassage de la première étagère par le véhicule de transport (2), et commander le déplacement du véhicule de transport (2) au moyen du premier ou du second passage de retour (633, 634, 635) de la première position de ramassage à la zone d'étagère (62),
**caractérisé en ce que** le programme amène en outre l'ordinateur à mettre en œuvre la délivrance en sortie d'un second signal de commande pour effectuer un glissement d'étagère une fois ou une pluralité de fois, dans lequel, lors du glissement d'étagère, une seconde étagère précédemment adjacente à la première étagère est transportée par le véhicule de transport (2) jusqu'à un espace libre (652) créé après le transport de la première étagère, et
le second signal de commande inclut un signal pour répéter le glissement d'étagère jusqu'à ce que l'espace libre (652) se déplace jusqu'à une position incluse dans la première rangée d'étagères (511) du groupe d'étagères prédéterminé.
